# EUROPEAN PATENT APPLICATION

(11) **EP 4 618 577 A1**
(43) Date of publication of application: **17.09.2025**
(21) Application number: 25161039.0
(22) Date of filing: 28.02.2025
(51) Int. Cl.: H04N 23/62, H04N 23/745

(54) **IMAGE CAPTURING APPARATUS, CONTROL METHOD, PROGRAM, AND STORAGE MEDIUM THEREFOR**

(30) Priority: 13.03.2024 JP 2024039478
(71) Applicant: CANON KABUSHIKI KAISHA, Tokyo 146-8501 (JP)
(72) Inventor: YANAGIBASHI, Ken, Tokyo, 146-8501 (JP); HATA, Kohei, Tokyo, 146-8501 (JP); TOMIZAWA, Satsuki, Tokyo, 146-8501 (JP); ISE, Toshimichi, Tokyo, 146-8501 (JP); KOBAYASHI, Takashi, Tokyo, 146-8501 (JP)
(74) Representative: Canon Europe Limited

(57) **Abstract**

An image capturing apparatus (10) includes detection means configured to detect flicker in an image, setting means configured to set an exposure time of imaging means (104), calculation means configured to calculate an exposure time to suppress flicker, and control means configured to cause display means (110) to display an operation object (206) representing at least a portion of a range of exposure times that can be set by the setting member.

## Description

### BACKGROUND OF THE DISCLOSURE

### Field of the Disclosure

The aspect of the embodiments relates to an image capturing apparatus, a control method, a program, and a storage media therefor, and in particular to exposure control techniques for periodic light intensity changes (referred to as flicker).

### Description of the Related Art

In recent years, there has been an increase in on-site photography using light-emitting diode (LED) lighting and LED displays. Since LEDs repeatedly turn on and off at regular intervals, flicker can occur in the captured images. Therefore, it is important to match the shutter speed of the image capturing apparatus to the turning on/off cycle of the LED light source to reduce flicker.

Some image capturing apparatuses are equipped with a graphical user interface (GUI) that displays a slider (slide bar) representing a portion of a range of settable shutter speeds alongside the captured image as a means to set the shutter speed. The user can operate the GUI while checking the presence of flicker to adjust the shutter speed. Japanese Patent Laid-Open Publication No. 10-301745 discloses that a set shutter speed value and a fixed shutter speed value, as well as difference information between these values are displayed on the slider.

### SUMMARY OF THE DISCLOSURE

The present disclosure in its first aspect provides an image capturing apparatus as specified in claim 1. Preferable features of the first aspect of the present disclosure are specified in claims 2 to 16. These preferable features of the first aspect are also preferable features of the other aspects of the present disclosure.

The present disclosure in its second aspect provides a method for controlling an image capturing apparatus as specified in claim 17.

The present disclosure in its third aspect provides a program as specified in claim 18.

The present disclosure in its fourth aspect provides a computer-readable storage medium as specified in claim 19.

Further features of the present disclosure will become apparent from the following description of embodiments with reference to the attached drawings.

### BRIEF DESCRIPTION OF THE DRAWINGS

Fig. 1 is a diagram illustrating a configuration example of an image capturing apparatus.
Fig. 2 is a diagram illustrating an example of a shutter speed setting screen.
Fig. 3 is a diagram illustrating an example of a table of shutter speeds that can be set when fine adjustment buttons are operated.
Figs. 4A and 4B are diagrams each illustrating an example of a table of shutter speeds that can be set when rough adjustment buttons are operated.
Fig. 5 is a flowchart illustrating an example of a process of displaying an indicator on a slider for a shutter speed that reduces the impact of flicker.
Figs. 6A and 6B illustrate examples of a screen displaying an indicator on the slider for the currently set shutter speed and another indicator for a shutter speed that reduces the impact of flicker.
Figs. 7A and 7B illustrate examples of a screen displaying an indicator at the end of the slider, indicating that the shutter speed that reduces the impact of detected flicker is outside the display range.
Fig. 8 is a graph representing the relationship between the currently set shutter speed and the shutter speed that reduces the impact of detected flicker.
Figs. 9A, 9B, and 9C illustrate examples of a screen displaying a prioritized indicator on the slider.
Fig. 10 is a flowchart illustrating a shutter speed setting process.
Fig. 11 is a flowchart illustrating a rough adjustment button display update process.
Fig. 12 is a diagram illustrating an example of a shutter speed setting screen where the rough adjustment button display update process has been performed.
Figs. 13A, 13B, and 13C are diagrams each illustrating a modification of the shutter speed setting screen.
Fig. 14 is a flowchart for changing the speed at which the shutter speed is changed based on the component operated by the user and its state in a third embodiment.

### DESCRIPTION OF THE EMBODIMENTS

Hereinafter, embodiments will be described in detail with reference to the attached drawings. Note, the following embodiments are not intended to limit the scope of the disclosure. Multiple features are described in the embodiments, but limitation is not made to a disclosure that requires all such features, and multiple such features may be combined as appropriate. Furthermore, in the attached drawings, the same reference numerals are given to the same or similar configurations, and redundant description thereof is omitted.

### First Embodiment

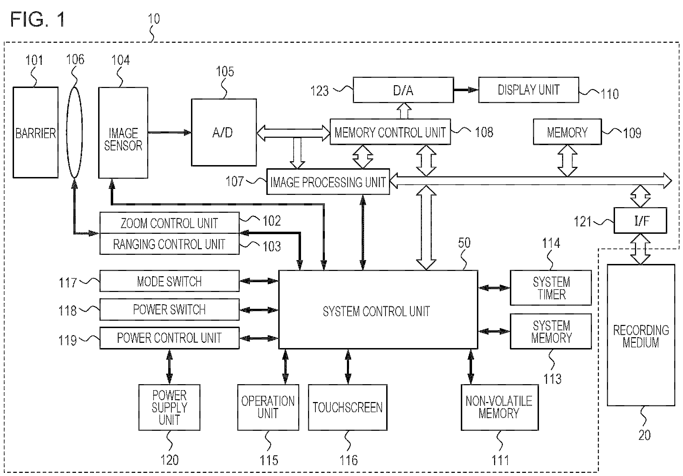

Fig. 1 is a block diagram illustrating the functional configuration of a camera 10, which is a digital video camera (camera) according to a first embodiment.

In Fig. 1, the components represented as blocks can be implemented by integrated circuits (ICs) such as application-specific integrated circuits (ASICs) or field-programmable gate arrays (FPGAs), by discrete circuits, or by a combination of a memory and a processor that executes a program stored in the memory. Additionally, a single block may be implemented by multiple integrated circuit packages, or multiple blocks may be implemented by a single integrated circuit package. Furthermore, the same block may be implemented in different configurations depending on factors such as the operating environment and the required capabilities.

In the following embodiment, the case where the present disclosure is implemented in an image capturing apparatus such as a digital video camera will be described; however, the present disclosure can also be implemented in any electronic device with image capturing functionality.

Such electronic devices include, besides image capturing apparatuses, computer devices (personal computers, tablet computers, media players, personal digital assistants (PDAs), etc.), mobile phones, smartphones, and the like. Note that these devices are merely examples, and the present disclosure can be implemented in other electronic devices.

A barrier 101 is a protective member that covers an imaging system including an image capturing lens 106 of the camera 10 to prevent dirt or damage to the imaging system.

The image capturing lens 106 is a lens group including a zoom lens and a focus lens. The zoom lens changes the zoom magnification by varying the focal length. The zoom lens is controlled by a zoom control unit 102. The focus lens is a lens used for focusing. The focus lens is controlled by a ranging control unit 103.

An image sensor 104 is an imaging device, such as a charge-coupled device (CCD) or complementary metal-oxide semiconductor (CMOS) device, that converts an optical image into an electrical signal. In addition, the exposure time of the image sensor 104 can be controlled according to a shutter speed that can be set as an exposure control value pertaining to the image sensor 104.

An analog-to-digital (A/D) conversion unit 105 performs processing such as sampling, gain adjustment, and A/D conversion on an analog image signal output from the image sensor 104 to obtain a digital image signal, and outputs it.

An image processing unit 107 performs various types of image processing on the digital image signal output from the A/D conversion unit 105, and outputs the processed digital image signal (image data). For example, the image processing unit 107 may perform resizing processing such as certain pixel interpolation and reduction, as well as color conversion processing, on the digital image signal output from the A/D conversion unit 105. The image processing unit 107 can perform similar processing on image data from a memory control unit 108. Additionally, the image processing unit 107 performs certain computational processing using the image data. Based on the computational result obtained by the image processing unit 107, a system control unit 50 can perform flicker detection, exposure control, and ranging control. As a result, through-the-lens (TTL) autofocus (AF) processing, automatic exposure (AE) processing, and electronic flash (EF) (pre-flash emission) processing are performed.

The image data output by the A/D conversion unit 105 is written to a memory 109 through the image processing unit 107 and the memory control unit 108.

The memory 109 stores image data obtained by the image sensor 104 and converted into digital data by the A/D conversion unit 105, as well as image data intended for display on a display unit 110, as described later. The memory 109 has sufficient storage capacity to accommodate a certain number of still images, a certain duration of moving images, and audio data. Additionally, the memory 109 also serves as memory for image display (video memory) when displaying image data read from a recording medium 20 or on-screen display (OSD) data on the display unit 110.

A digital-to-audio (D/A) conversion unit 123 converts a digital image signal (image data) for image display, stored in the memory 109, into an analog image signal and supplies it to the display unit 110. Thus, the image data for display, written in the memory 109, is displayed by the display unit 110 through the D/A conversion unit 123.

The display unit 110 is configured with a liquid crystal display (LCD) or the like, and performs display according to the analog image signal supplied from the D/A conversion unit 123. For example, the analog image signal supplied from the D/A conversion unit 123 is sequentially transferred to the display unit 110 and displayed, thereby implementing the function of an electronic viewfinder (EVF) to display a live view image. The display unit 110 may be another type of display, such as an organic electroluminescence (EL) display. Additionally, while the display unit 110 is an electronic viewfinder, it may also be a small (e.g., 3.5-inch) liquid crystal monitor or an external output such as High-Definition Multimedia Interface (HDMI)^{®} or serial digital interface (SDI). Furthermore, the display unit 110 may include multiple of these display outputs.

A non-volatile memory 111 is a memory that serves as an electrically erasable and recordable recording medium, such as an electrically erasable programmable read-only memory (EEPROM). The non-volatile memory 111 stores constants for the operation of the system control unit 50, programs, and the like. The programs include programs for executing various flowcharts, as described later.

For example, a random-access memory (RAM) is used as a system memory 113. The system memory 113 stores constants and variables for the operation of the system control unit 50, programs read from the non-volatile memory 111, and the like.

The system control unit 50 controls the entire camera 10. The system control unit 50 reads the programs stored in the non-volatile memory 111, loads them into the system memory 113, and executes them, thereby implementing various processes, as described later. The system control unit 50 also performs display control by controlling components such as the memory 109, the D/A conversion unit 123, and the display unit 110.

A system timer 114 measures time used for various types of control as well as the time of a built-in clock.

An operation unit 115 is an operation unit used to input various operation instructions to the system control unit 50. The operation unit 115 includes a set key, cross keys (up, down, left, and right), and buttons such as a menu button, a cancel button, and auto-focus (AF)/manual focus (MF). For example, when the menu button is pressed, a menu screen where various settings can be configured is displayed on the display unit 110. The user can intuitively configure various settings using the menu screen displayed on the display unit 110, as well as the cross keys, set key, and the like. Additionally, the operation unit 115 may include not only buttons, but also dials, such as a main dial and a sub-dial. For example, the user can perform an operation to set the shutter speed by using a dial.

A touchscreen 116 is a touch sensor that detects various touch operations on the display surface of the display unit 110 (the operation surface of the touchscreen 116). The touchscreen 116 and the display unit 110 can be integrally configured. For example, the touchscreen 116 is configured to ensure that the light transmittance does not interfere with the display of the display unit 110, and is mounted on the upper layer of the display surface of the display unit 110. Then, the input coordinates of the touchscreen 116 and the display coordinates on the display surface of the display unit 110 are associated. As a result, a graphical user interface (GUI) enabling the user to operate a screen displayed on the display unit 110 as if directly interacting with it can be provided.

A mode switch 117 is, for example, a switch used to switch the operating mode of the camera 10. When the mode switch 117 is operated, the operating mode of the system control unit 50 can be switched to either a video recording mode, a playback mode, or another mode.

A power switch 118 is a button used to switch between power on and power off.

A power control unit 119 is configured with components such as a battery detection circuit, a direct current (DC)-DC converter, and a switch circuit for switching power to blocks, and detects whether a battery is mounted, the type of battery, and the remaining battery level. Additionally, the power control unit 119 controls the DC-DC converter based on the detection results and instructions from the system control unit 50, supplying the required voltage to components, including the recording medium 20, for the necessary duration.

A power supply unit 120 consists of primary batteries such as alkaline or lithium batteries, secondary batteries such as NiCd, NiMH, and Li batteries, as well as an alternating current (AC) adapter, supplying power to the power control unit 119.

A recording medium interface (I/F) 121 is an interface with the recording medium 20 such as a memory card or a hard disk.

The recording medium 20 is a recording medium for recording captured image data, consisting of semiconductor memory, magnetic disks, and the like.

The above describes an example of the basic configuration of the camera 10 according to the first embodiment.

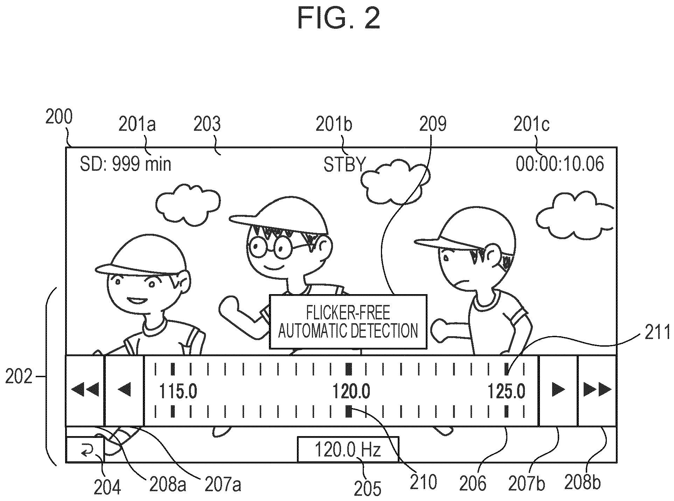

Fig. 2 is a diagram illustrating an example of a screen for setting the shutter speed on the camera 10. The shutter speed can be set, for example, by the user through the operation unit 115 or the touchscreen 116. The system control unit 50 controls the display unit 110 to display a screen 200 for the user to set the shutter speed (shutter speed setting screen). The shutter speed setting screen 200 is a screen that allows the user to set the shutter speed to control the exposure time during image capturing with the image sensor 104.

On the shutter speed setting screen 200, items such as recordable time 201a, recording state 201b, recording time code 201c, shutter speed setting menu 202, and image data 203 are displayed. The recordable time 201a, recording state 201b, recording time code 201c, and shutter speed setting menu 202 are on-screen display (OSD) data, and they are displayed superimposed on the image data 203. The image data 203 displayed on the display unit 110 is, for example, a live view image.

The shutter speed setting menu 202 includes a menu exit button 204, current shutter speed display 205, a slider 206, fine adjustment buttons 207a and 207b, rough adjustment buttons 208a and 208b, and a flicker-free automatic detection button 209. The menu exit button 204 is a button used to close the display of the shutter speed setting menu 202. The current shutter speed display 205 displays the value of the current shutter speed set on the camera 10. In Fig. 2, 120.0 Hz is set as an example.

The slider 206 is displayed as a slider-like operation object. In the display of the slider 206, the central portion represents the current shutter speed set on the camera 10, while both sides display a portion of a range of shutter speeds that can be set on the camera 10. Also, an indicator 210 is displayed in the center of the slider 206 so that the currently set shutter speed can be recognized. In the present embodiment, a range from the current shutter speed set on the camera 10 up to ±5.5 Hz is displayed on the slider 206. In the present embodiment, the indicator 210 is displayed at the position corresponding to 120.0 Hz, which is the current shutter speed set on the camera 10. Additionally, sub indicators 211 are displayed at positions ±5.0 Hz, specifically at 115.0 Hz and 125.0 Hz. Furthermore, auxiliary indicators are displayed at regular intervals as finer indicators.

The user can set the shutter speed by performing flicking operations on the slider 206 displayed on the display unit 110. The fine adjustment buttons 207a and 207b are buttons used for making fine adjustments to the shutter speed, and can be operated by the user, such as through touch. In the present embodiment, the shutter speed that can be set on the camera 10 can be adjusted by operating the fine adjustment buttons 207a and 207b.

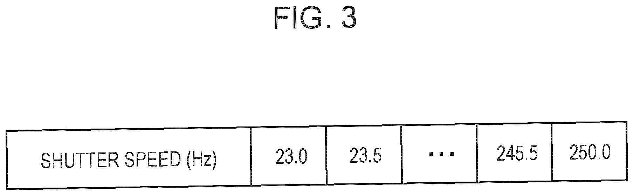

Fig. 3 is a diagram illustrating an example of a table (table for fine adjustment) of shutter speeds that can be set when the fine adjustment buttons are operated. It is described in the present embodiment that shutter speeds can be set in increments of 0.5 Hz, ranging from 23.0 Hz to 250.0 Hz. For example, when the fine adjustment button 207a is operated once, the shutter speed is changed to the value immediately to the left of the current value in the table. If the current set value is 120.0 Hz, a single touch of the fine adjustment button 207a will change the shutter speed to 119.5 Hz. Additionally, when the fine adjustment button 207b is operated once, the shutter speed is changed to the value immediately to the right of the current value in the table. If the current set value is 120.0 Hz, a single touch of the fine adjustment button 207b will change the shutter speed to 120.5 Hz. Furthermore, flicking operations on the slider 206 will set the shutter speed within this table.

The rough adjustment buttons 208a and 208b are used to make adjustments to the shutter speed that reduces the impact of flicker, with wider increments compared to the fine adjustment buttons 207a and 207b. In the present embodiment, by operating the rough adjustment buttons 208a and 208b, the shutter speed can be set to N times and 1/N times (N is a natural number) of the shutter speed calculated by flicker-free automatic detection, as described later. Due to the characteristics of flicker, reducing the impact of flicker can be achieved not only by using the shutter speed calculated by flicker-free automatic detection, but also by setting the shutter speed to 1/N times thereof. Therefore, shutter speeds other than that calculated by flicker-free automatic detection can be used as shutter speed candidates (recommended values) for reducing the impact of flicker.

In the present embodiment, for the convenience of user operation, not only a shutter speed calculated through flicker-free automatic detection but also its N-times shutter speeds can be adjusted as candidates.

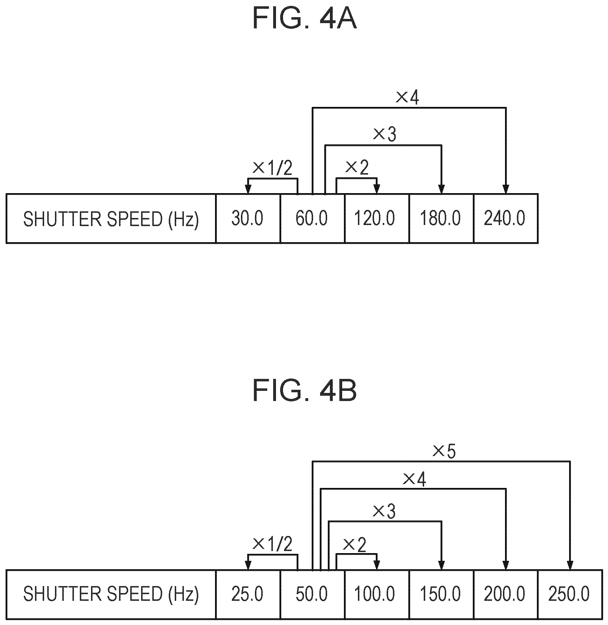

Figs. 4A and 4B are diagrams each illustrating an example of a table (table for rough adjustment) of shutter speeds that can be set when the rough adjustment buttons are operated. Figs. 4A and 4B illustrate examples of a table of shutter speeds that can be set when the rough adjustment buttons are operated in the case where flicker-free automatic detection calculates 60.0 Hz and 50.0 Hz, respectively. Figs. 4A and 4B illustrate values that are N times and 1/N times (N is a natural number) of 60.0 Hz and 50.0 Hz, respectively.

When the rough adjustment button 208a is pressed once, the shutter speed is changed to the nearest shutter speed among the shutter speeds lower than the currently set shutter speed among those illustrated in Figs. 4A and 4B. For example, if the current set value in Fig. 4A is 60.0 Hz, a single touch of the rough adjustment button 208a will change the shutter speed to 30.0 Hz.

In contrast, when the rough adjustment button 208b is pressed once, the shutter speed is changed to the nearest shutter speed among the shutter speeds higher than the currently set shutter speed among those illustrated in Figs. 4A and 4B. For example, if the current set value in Fig. 4A is 60.0 Hz, a single touch of the rough adjustment button 208b will change the shutter speed to 120.0 Hz.

The flicker-free automatic detection button 209 is a button used to automatically detect a shutter speed that reduces the impact of flicker. In the present embodiment, a shutter speed that reduces the impact of flicker is calculated by detecting differences in light intensity (light and dark) in multiple images obtained through continuous image capturing. However, the method of calculating a shutter speed that reduces the impact of flicker is not limited to this. Additionally, in the present embodiment, when the flicker-free automatic detection button 209 is executed, the calculated shutter speed is automatically set. Furthermore, the flicker-free automatic detection button 209 is not only displayed on the touchscreen 116, but also the camera 10 may be provided with a separate button or the like.

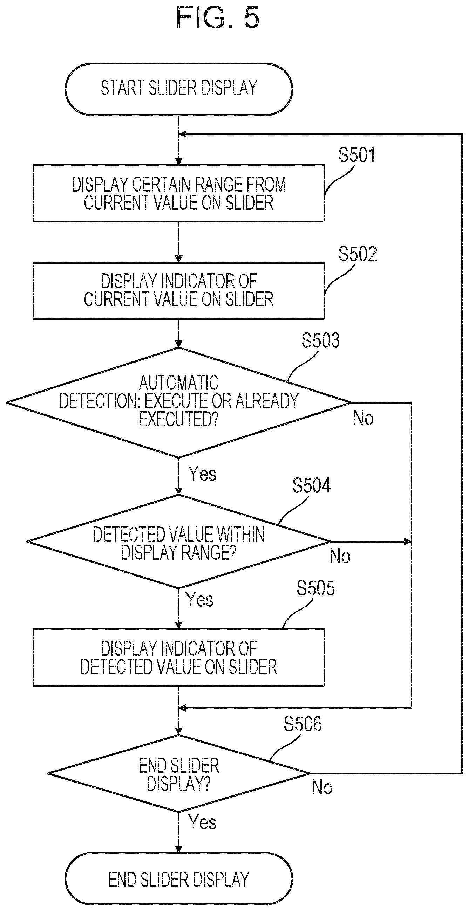

Fig. 5 is a flowchart illustrating an example of a process of displaying an indicator on the slider for a shutter speed that reduces the impact of flicker. The processing of each step in this flowchart is implemented by the system control unit 50 loading a program stored in the non-volatile memory 111 into the system memory 113 and executing it. First, the display processing of the slider begins on the display unit 110, which serves as the display surface of the touchscreen 116, in response to a certain operation, such as the user's operation based on a menu displayed on the display unit 110.

Firstly, in step S501, the system control unit 50 displays shutter speeds in a certain range from the currently set shutter speed on the slider. After that, the process proceeds to step S502.

Next, in step S502, the system control unit 50 displays an indicator indicating the currently set shutter speed on the slider. After that, the process proceeds to step S503.

Next, in step S503, the system control unit 50 determines whether flicker automatic detection has been performed. Specifically, it is determined whether the flicker-free automatic detection button 209 has been operated to perform flicker automatic detection. If it is determined that flicker automatic detection has been performed, the process proceeds to step S504. If it is determined that no flicker automatic detection has been performed, the process proceeds to step S506.

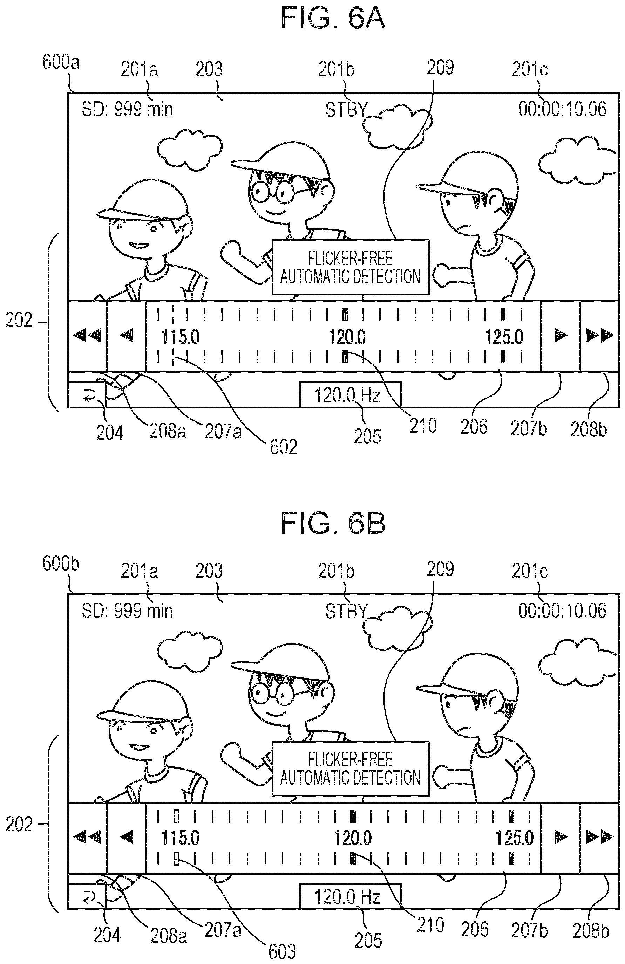

Next, in step S504, the system control unit 50 determines whether a shutter speed that reduces the impact of the detected flicker is included among the shutter speeds displayed on the slider in step S501. If the detected shutter speed is determined to be within the current display range, the process proceeds to step S505. In contrast, if flicker automatic detection is determined to be out of the display range, the process proceeds to step S506. In Figs. 6A and 6B, as described later, it is described that the detected shutter speed is determined to be within the display range when it falls within a range of ±5.5 Hz from the currently set shutter speed of 120.0 Hz. Separately, if a shutter speed that reduces the impact of the detected flicker is outside the display range, an indicator representing that it is outside the display range may be displayed at an end of the slider.

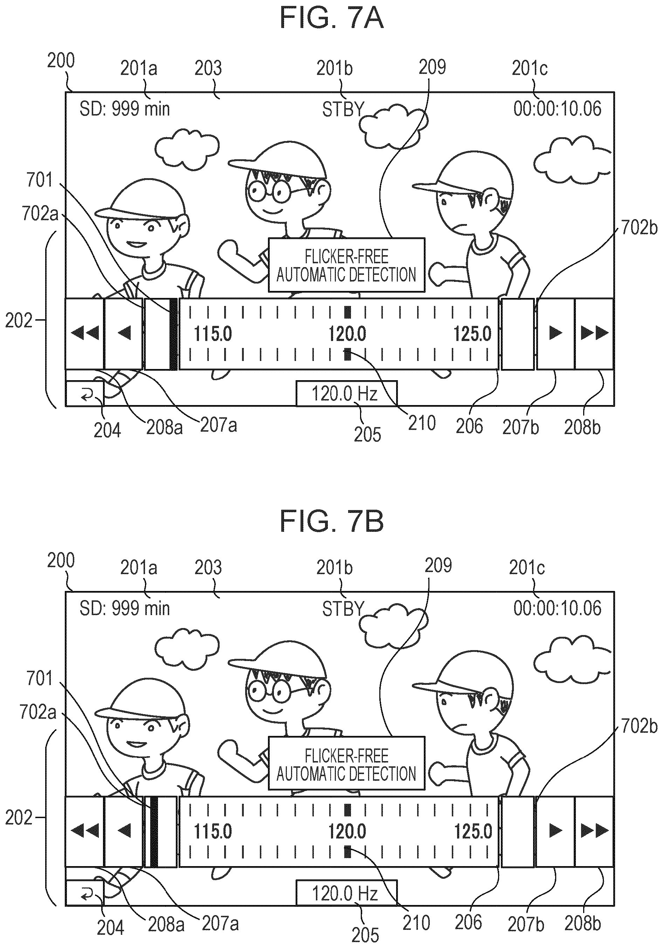

Fig. 7A illustrates an example of a screen displaying an indicator at an end of the slider indicating that a shutter speed that reduces the impact of the detected flicker is outside the display range. An indicator 701 is an indicator indicating that a shutter speed that reduces the impact of the detected flicker is outside the display range.

A region 702a indicates a region where the indicator 701 is displayed if a shutter speed that reduces the impact of the detected flicker is less compared to the currently set shutter speed and outside the display range of the slider. A region 702b indicates a region where the indicator 701 is displayed if a shutter speed that reduces the impact of the detected flicker is great compared to the currently set shutter speed and outside the display range of the slider.

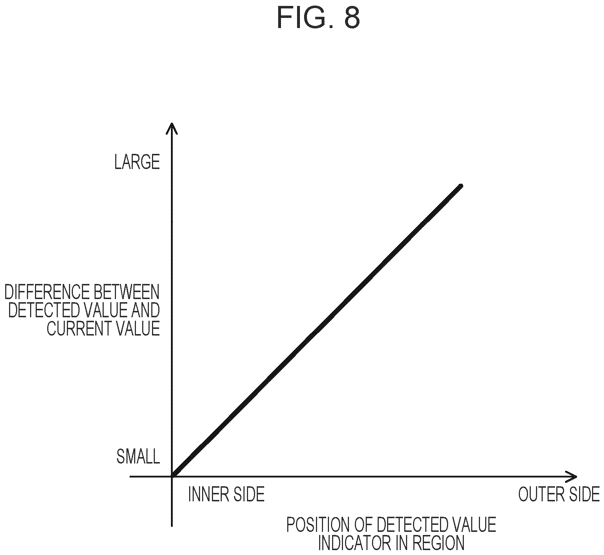

The position at which the indicator 701 is displayed may be changed within the range of the region 702a and the region 702b according to a graph that represents the relationship between the currently set shutter speed and a shutter speed that reduces the impact of the detected flicker, as illustrated in Fig. 8. Fig. 7B illustrates an example of displaying the indicator 701 on the screen when a shutter speed that reduces the impact of the detected flicker is small compared to the currently set shutter speed and their difference is greater than the situation in Fig. 7A. Here, to indicate that the shutter speed that reduces the impact of the flicker is farther from the currently set shutter speed compared to the situation in Fig. 7A, the indicator 701 is displayed farther outward (to the left) than in Fig. 7A.

Next, in step S505, the system control unit 50 displays an indicator of the shutter speed that reduces the impact of the detected flicker on the slider. After that, the process proceeds to step S506.

Figs. 6A and 6B illustrate examples of a screen displaying an indicator on the slider for a shutter speed that reduces the impact of flicker. A shutter speed setting screen 600a illustrated in Fig. 6A corresponds to an example of displaying an indicator when the currently set shutter speed is 120.0 Hz and a shutter speed that reduces the impact of flicker is 115.0 Hz. At this time, since the shutter speed that reduces the impact of flicker exists within the display range of the slider 206, an indicator 602 is displayed as a dotted line at the 115.0 Hz position on the slider.

A shutter speed setting screen 600b illustrated in Fig. 6B corresponds to an example of displaying an indicator when a shutter speed that reduces the impact of flicker is 230.0 Hz. When the shutter speed that reduces the impact of flicker is 230.0 Hz, one of the shutter speeds to transition to upon operating the rough adjustment button(s) will be 115.0 Hz. Accordingly, an indicator 603 is displayed at the 115.0 Hz position on the slider to correspond to the display range of the current slider.

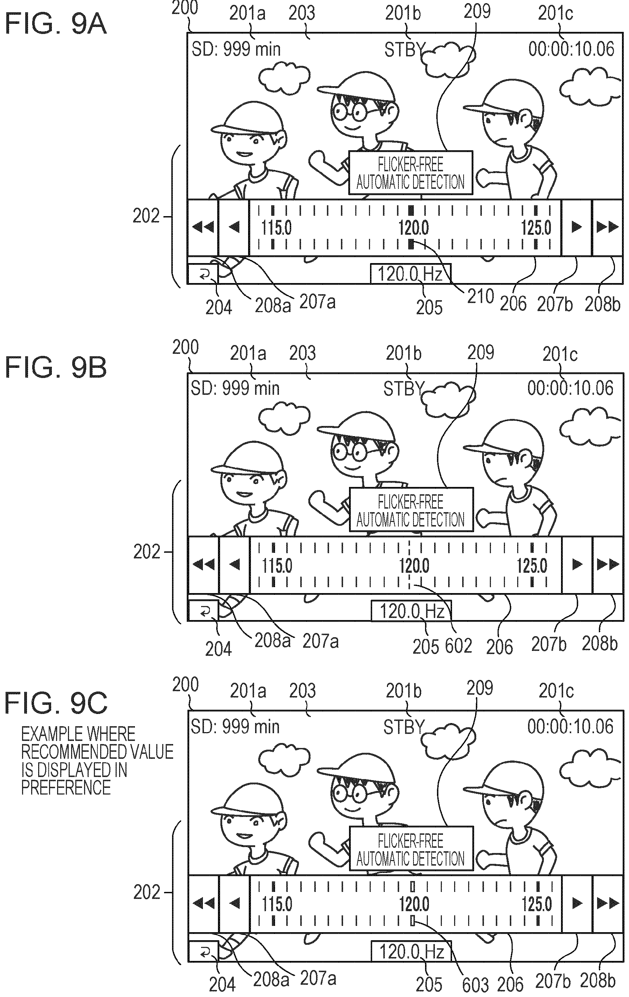

Although the indicators 210, 602, and 603 have been described as above, if they each indicate the same shutter speed, any one of the indicators may be displayed in preference. Fig. 9A illustrates an example of a screen that displays the indicator 210 in preference. Fig. 9B illustrate an example of a screen that displays the indicator 602 in preference. Fig. 9C illustrates an example of a screen that displays the indicator 603 in preference.

Next, in step S506, the system control unit 50 determines whether an operation to end the display processing of the slider has been performed in response to a certain operation, such as the user's manual operation based on menu display displayed on the display unit 110 or the like. If it is determined that an operation to end the display processing has been performed, the display processing of the slider ends. If it is determined that no operation to end the display processing has been performed, the process proceeds to step S501.

As described above, in the present embodiment, an indicator indicating a shutter speed that reduces the impact of flicker is displayed on the slider. This allows the user to easily recognize the extent and direction of the deviation of the detected shutter speed when adjusting the shutter speed with a slider operation.

Although the present embodiment describes an example in which a shutter speed that reduces the impact of flicker is displayed as an indicator on the slider, the display method is not limited to the method in the present embodiment. For example, a numerical value representing a shutter speed may be displayed on the slider, with its text color changed to serve as an indicator. Alternatively, an icon may be displayed to indicate to the user the direction and extent of the deviation between the detected shutter speed and the currently set shutter speed.

Additionally, during the slider operation performed by the user in this flowchart, if the slider operation is performed at or below a certain speed, the slider operation may be stopped upon reaching a shutter speed that reduces the impact of flicker. This enables the user to adjust the shutter speed to a shutter speed that reduces the impact of flicker using the slider operation without overshooting the desired shutter speed.

### Second Embodiment

Next, a second embodiment of the present disclosure will be described. The second embodiment describes the display of the shutter speed to change to when the rough adjustment button is operated. Note that the functional configuration of the camera 10 in the second embodiment is described as being the same as that illustrated in Fig. 1.

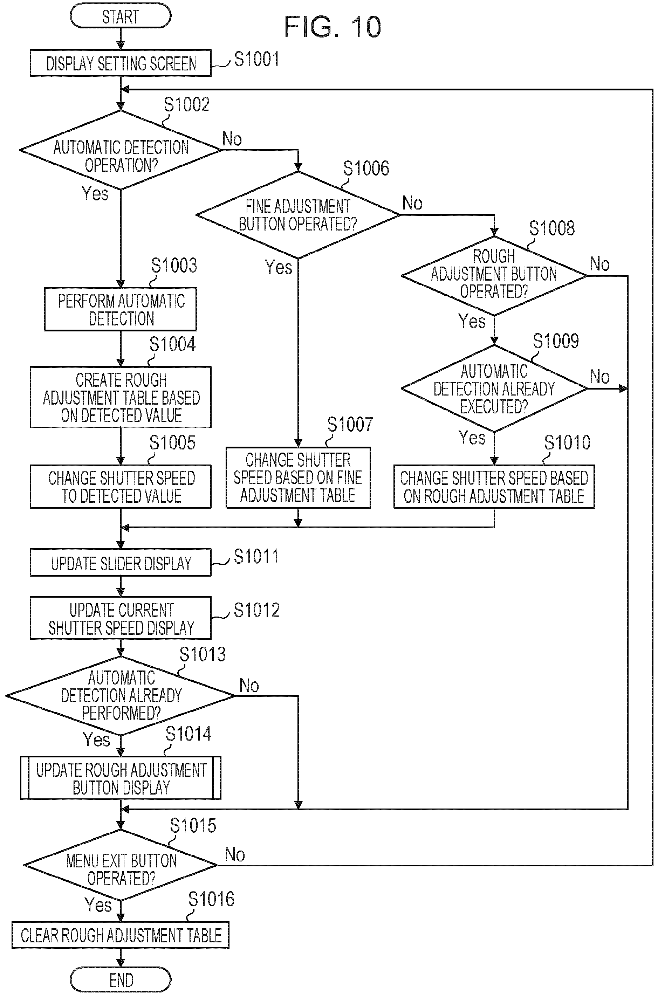

Fig. 10 is a flowchart illustrating a shutter speed setting process in the second embodiment. This process is implemented by the system control unit 50 loading a program stored in the non-volatile memory 111 into the system memory 113 and executing it.

In step S1001, the system control unit 50 controls the display unit 110 to display the shutter speed setting screen 200 illustrated in Fig. 2.

In step S1002, the system control unit 50 determines whether the user has operated the flicker-free automatic detection button 209 through the touchscreen 116. Note that the configuration may be such that the camera 10 is separately provided with an operation member corresponding to the flicker-free automatic detection button 209. In that case, the system control unit 50 may determine whether this operation member has been operated. If the system control unit 50 determines that the flicker-free automatic detection button 209 has been operated, it performs control to transition to step S1003; otherwise, it performs control to transition to step S1006.

In step S1003, the system control unit 50 performs the automatic detection of a shutter speed that reduces the impact of flicker.

In step S1004, the system control unit 50 performs control to create a table of shutter speeds to transition to from the shutter speed detected in step S1003 in response to operating the rough adjustment button, as illustrated in Fig. 4B of the first embodiment.

In step S1005, the system control unit 50 controls the shutter speed to change to the shutter speed detected in step S1003.

In step S1006, the system control unit 50 determines whether the user has operated the fine adjustment button 207 through the touchscreen 116 or the like. If the system control unit 50 determines that the fine adjustment button 207 has been operated, it performs control to transition to step S1007; otherwise, it performs control to transition to step S1008.

In step S1007, the system control unit 50 performs control to change the shutter speed based on the table for fine adjustment illustrated in Fig. 3 of the first embodiment.

In step S1008, the system control unit 50 determines whether the user has operated the rough adjustment button 208 or a later-described rough adjustment button 1201 through the touchscreen 116. If the system control unit 50 determines that the rough adjustment button 208 or the rough adjustment button 1201 has been operated, it performs control to transition to step S1009; otherwise, it performs control to transition to step S1015.

In step S1009, the system control unit 50 determines whether the automatic detection of a shutter speed that reduces the impact of flicker in step S1003 has been performed at least once during the display of the shutter speed menu 202. If the system control unit 50 determines that the automatic detection of a shutter speed that reduces the impact of flicker has been performed, it performs control to transition to step S1010; otherwise, it performs control to transition to step S1015.

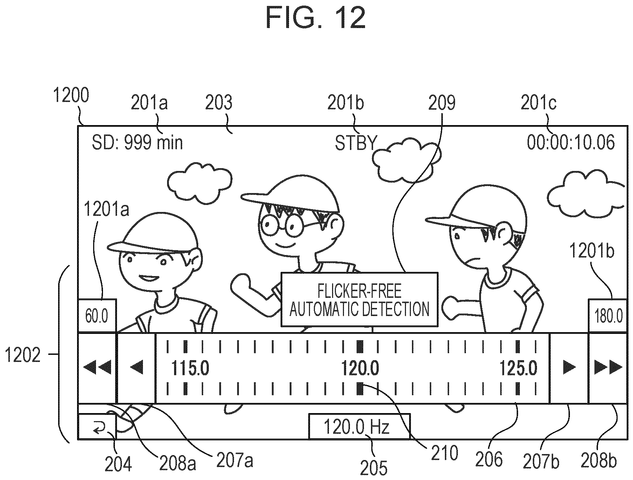

In step S1010, the system control unit 50 performs control to change the shutter speed of the camera 10 based on the table illustrated in Fig. 4A or 4B. Specifically, the shutter speed is set to the shutter speeds of rough adjustment values 1201a and 1201b in Fig. 12, which are determined in a later-described rough adjustment button display update process.

In step S1011, the system control unit 50 controls the display of the slider 206 to be updated. In the present embodiment, a range of ±5.5 Hz relative to the current shutter speed set on the camera 10 is displayed on the slider 206.

In step S1012, the system control unit 50 performs control to display the value of the current shutter speed set on the camera 10 as the current shutter speed display 205.

In step S1013, the system control unit 50 determines whether the automatic detection of a shutter speed that reduces the impact of flicker in step S1003 has been performed at least once during the display of the shutter speed menu 202. If the system control unit 50 determines that the automatic detection of a shutter speed that reduces the impact of flicker has been performed, it performs control to transition to step S1014; otherwise, it performs control to transition to step S1015.

In step S1014, the system control unit 50 performs control to perform a process of updating the display of the rough adjustment buttons (display update process). The rough adjustment button display update process will be described in detail later.

Fig. 12 is a diagram illustrating an example of a shutter speed setting screen where the process of updating the rough adjustment buttons displayed on the display unit 110 has been performed. On a shutter speed setting screen 1200, a shutter speed setting menu 1202 is displayed. The shutter speed setting menu 1202 displays the rough adjustment values 1201a and 1201b.

The rough adjustment values 1201a and 1201b display the shutter speeds to change to when the rough adjustment buttons 208a and 208b are operated, respectively. In Fig. 12, 60.0 Hz has been detected in advance by flicker-free automatic detection, and the table illustrated in Fig. 4A has been created. Furthermore, the current shutter speed set on the camera 10 is 120.0 Hz, and if the rough adjustment button 208a is operated in this state, the shutter speed is changed to 60.0 Hz. Therefore, "60.0" is displayed at the rough adjustment value 1201a. Similarly, if the rough adjustment button 208b is operated, the shutter speed is changed to 180.0 Hz. Therefore, "180.0" is displayed at the rough adjustment value 1201b.

In step S1015, the system control unit 50 determines whether the user has operated the menu exit button 204 through the touchscreen 116. If the system control unit 50 determines that the menu exit button 204 has been operated, it performs control to transition to step S1016; otherwise, it performs control to return to step S1002.

In step S1016, the system control unit 50 clears the rough adjustment table created in step S1004, and performs control to close the shutter speed setting screen 1200. The above describes an overview of the flow of displaying the shutter speeds to change to when the rough adjustment buttons are operated in the second embodiment.

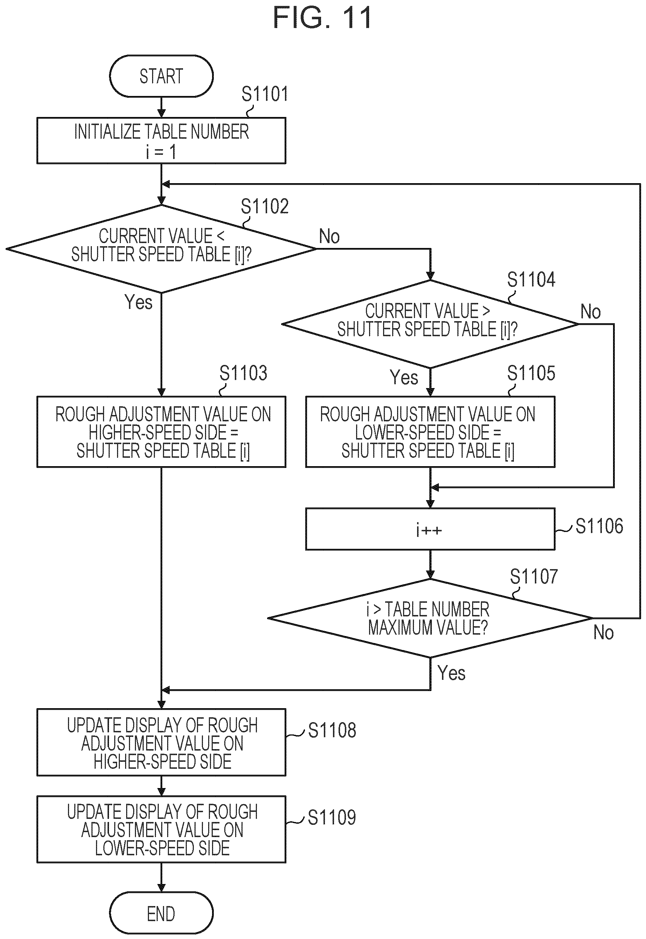

Fig. 11 is a flowchart illustrating a rough adjustment button display update process in the second embodiment. This process is implemented by the system control unit 50 loading a program stored in the non-volatile memory 111 into the system memory 113 and executing it.

In step S1101, the system control unit 50 performs an initialization process for a table number i to reference a rough adjustment value from the rough adjustment table created in step S1004 of Fig. 10, and performs control to set i to 1. Here, as the value of i increases, higher shutter speeds are referenced from the table. For example, in the rough adjustment table illustrated in Fig. 4A, when i = 1, 30.0 Hz is referenced, and when i = 5, which is the maximum value of the table number, 240.0 Hz is referenced.

In step S1102, the system control unit 50 determines whether the current shutter speed of the camera 10 is less (slower) than the shutter speed of the rough adjustment table [i]. If the system control unit 50 determines that the current shutter speed of the camera 10 is less than the shutter speed of the rough adjustment table [i], it performs control to transition to step S1103; otherwise, it performs control to transition to step S1104.

In step S1103, the system control unit 50 performs control to set the rough adjustment value on the higher-speed side, which is a shutter speed higher (faster) than the current shutter speed of the camera 10, to which the shutter speed is changed when the rough adjustment button 208b is operated, in the rough adjustment table [i].

In step S1104, the system control unit 50 determines whether the current shutter speed of the camera 10 is greater (faster) than the shutter speed corresponding to the rough adjustment table [i]. If the system control unit 50 determines that the current shutter speed of the camera 10 is greater than the shutter speed of the rough adjustment table [i], it performs control to transition to step S1105; otherwise, it performs control to transition to step S1106.

In step S1105, the system control unit 50 performs control to set the rough adjustment value on the lower-speed side, which is a shutter speed lower than the current shutter speed of the camera 10, to which the shutter speed is changed when the rough adjustment button 208a is operated, in the rough adjustment table [i].

In step S1106, the system control unit 50 performs control to increment the table number i.

In step S1107, the system control unit 50 determines whether the table number i is greater than the maximum value of the table number. If the system control unit 50 determines that the table number i is greater than the maximum value of the table number, it performs control to transition to step S1108; otherwise, it performs control to return to step S1102.

In step S1108, the system control unit 50 performs control to display the rough adjustment value on the higher-speed side, which is set in step S1103, at the rough adjustment value 1201b of the shutter speed setting screen 1200 illustrated in Fig. 12. For example, in the case of the rough adjustment table illustrated in Fig. 4A, if the current shutter speed of the camera 10 is 120.0 Hz, 180.0 Hz is displayed. Additionally, if the current shutter speed of the camera 10 is 241.0 Hz, no rough adjustment value on the higher-speed side is set. Therefore, the rough adjustment value 1201b is not displayed.

In step S1109, the system control unit 50 displays the rough adjustment value on the lower-speed side, which is set in step S1105, at the rough adjustment value 1201a of the shutter speed setting screen 1200 illustrated in Fig. 12, and performs control to end the rough adjustment button display update process. For example, in the case of the rough adjustment table illustrated in Fig. 4A, if the current shutter speed of the camera 10 is 120.0 Hz, 60.0 Hz is displayed. Additionally, if the current shutter speed of the camera 10 is 29.0 Hz, no rough adjustment value on the lower-speed side is set. Therefore, the rough adjustment value 1201a is not displayed.

As described above, in the flowchart of Fig. 11, the display of the rough adjustment value can be updated either when the current shutter speed of the camera 10 matches the value set in the rough adjustment table or when it differs from the value set in the rough adjustment table.

By displaying the shutter speeds to change to when the rough adjustment buttons are operated as above, the user can visually recognize in advance how the shutter speed will be changed through the operation of the rough adjustment buttons when setting a shutter speed that reduces the impact of flicker.

In the present embodiment, the shutter speeds to change to when the rough adjustment buttons are operated are always displayed as the rough adjustment values. However, it is also acceptable to display the shutter speeds to change to when the rough adjustment buttons are operated only when they fall outside the display range of the slider. This is because, similar to the fine adjustment buttons, if the shutter speeds to change to when the rough adjustment buttons are operated are within the display range of the slider, the user can easily anticipate the resulting values after the change. With this specification, the display region for on-screen display (OSD) data on the shutter speed setting screen 1200 is reduced, while the display region for image data is increased, providing the advantage of making it easier for the user to capture images.

Additionally, in the present embodiment, if the automatic detection of a shutter speed that reduces the impact of flicker has not been performed, operating the rough adjustment buttons 208a and 208b will not result in any change to the shutter speed. However, this is not the only case. Even if automatic detection has not been performed, if the rough adjustment buttons 208a and 208b are operated, the current shutter speed set on the camera 10 could be changed to either half or double its current value.

Additionally, if automatic detection has not been performed, or if the rough adjustment values 1201 are not displayed even after the execution of automatic detection, operating the rough adjustment buttons 208 will not result in any change to the shutter speed, although the display of the rough adjustment buttons 208 may be changed. Additionally, operating the rough adjustment buttons 208 may change the shutter speed to either double or half the current shutter speed.

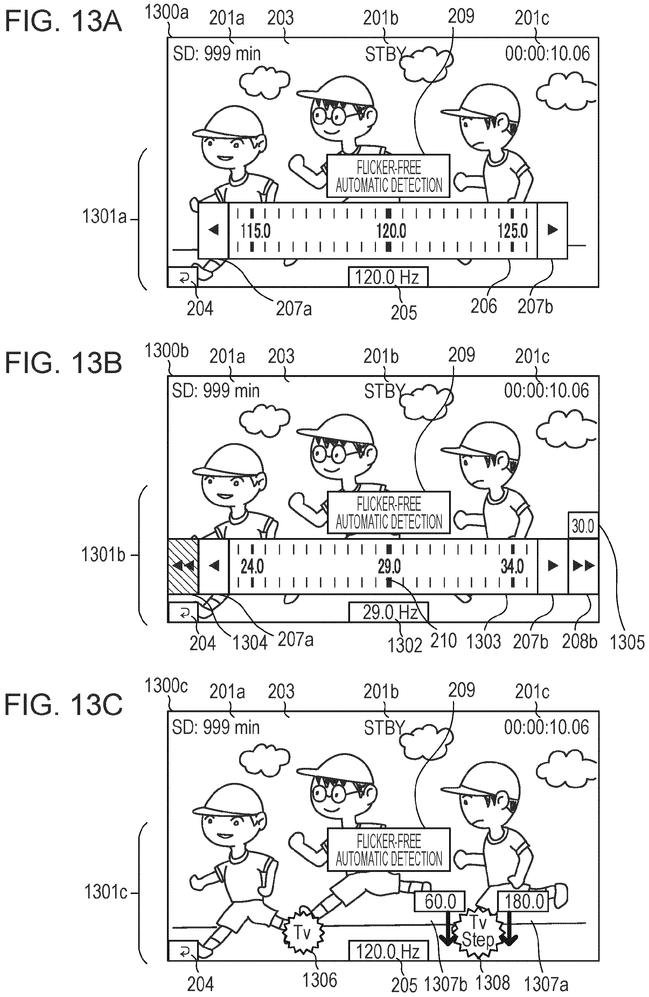

Figs. 13A, 13B, and 13C are diagrams each illustrating an example of a shutter speed setting screen where the display of the rough adjustment buttons has been changed.

Fig. 13A illustrates an example in which the buttons are hidden. On a shutter speed setting screen 1300a, a shutter speed setting menu 1301a is displayed. The shutter speed setting menu 1301a is such that, compared to the shutter speed setting menu 1202 illustrated in Fig. 12, the rough adjustment buttons 208a and 208b, as well as the rough adjustment values 1201a and 1201b, are hidden.

Fig. 13B illustrates an example in which the rough adjustment button on the lower-speed side is grayed out. On a shutter speed setting screen 1300b, a shutter speed setting menu 1301b is displayed. The shutter speed setting menu 1301b displays a current shutter speed 1302, a slider 1303, a rough adjustment button 1304, and a rough adjustment value 1305. In Fig. 13B, the rough adjustment table of Fig. 4A has been created, and the current shutter speed is 25.0 Hz. In this case, operating the rough adjustment button 1304 does not result in any change to the displayed shutter speed. Therefore, the rough adjustment button 1304 is grayed out, and its corresponding rough adjustment value is not displayed.

Additionally, in the present embodiment, if the current shutter speed set on the camera 10 is lower or higher than the lowest or highest shutter speed in the rough adjustment table, respectively, operating the rough adjustment buttons 208 will not result in any change to the shutter speed. In such cases, the system control unit 50 may loop through a table of shutter speeds that can be set in response to the operation of the rough adjustment buttons 208. Specifically, in the example illustrated in Fig. 4A, if the current shutter speed set on the camera 10 is 250.0 Hz, which exceeds 240.0 Hz, the highest speed in the table, the shutter speed may be set to 30.0 Hz, the lowest speed in the table. Similarly, in the example illustrated in Fig. 4A, if the current shutter speed set on the camera 10 is 25.0 Hz, which is lower than 30.0 Hz, the lowest speed in the table, the shutter speed may be set to 240.0 Hz, the highest speed in the table.

Additionally, while the present embodiment describes an example where operations on the shutter speed setting screen are operations performed through a touchscreen, similar operations may also be performed using buttons or dials provided on the operation unit 115.

Fig. 13C illustrates an example of displaying rough adjustment values on a screen where fine and rough adjustments can be made through two dial operations. On a shutter speed setting screen 1300c, the recordable time 201a, the recording state 201b, the recording time code 201c, the image data 203, and a shutter speed setting menu 1301c are displayed. The shutter speed setting menu 1301c displays the menu exit button 204, the current shutter speed display 205, a fine adjustment dial icon 1306, a rough adjustment dial icon 1308, rough adjustment values 1307a and 1307b, and the flicker-free automatic detection button 209.

On the shutter speed setting screen 1300c, when a dial provided on the operation unit 115, corresponding to the fine adjustment dial icon 1306, is rotated clockwise, the shutter speed is changed to the value to the right of the current value in the table illustrated in Fig. 3. Similarly, when the dial is operated counterclockwise, the shutter speed is changed to the left of the current value in the table illustrated in Fig. 3. Additionally, when a dial provided on the operation unit 115, corresponding to the rough adjustment dial icon 1308, is operated clockwise, the shutter speed is changed to the value of the rough adjustment value 1307a. Similarly, when the dial is operated counterclockwise, the shutter speed is changed to the value of the rough adjustment value 1307b.

In the present embodiment, while the fine adjustment dial icon 1306 and the rough adjustment dial icon 1308 have similar display forms (dial-type icons) in Fig. 13C, they are not limited to such icons. For example, the fine adjustment dial icon 1306 and the rough adjustment dial icon 1308 may have different display forms to make them more distinguishable.

In the present embodiment, an example has been described where the rough adjustment values are displayed adjacent to the rough adjustment buttons. However, this is not limited to this arrangement; for example, they may be displayed directly on the rough adjustment buttons.

### Third Embodiment

Next, a third embodiment of the present disclosure will be described. The third embodiment describes a modification when changing the shutter speed. Note that the functional configuration of the camera 10 in the third embodiment is described as being the same as that illustrated in Fig. 1.

In the third embodiment, when the system control unit 50 displays the shutter speed setting screen 200 illustrated in Fig. 2 on the display unit 110, it provides a modification of the operation when the user selects the setting of the shutter speed through the operation unit 115 or the touchscreen 116. In the third embodiment, usability is improved by changing the speed at which the shutter speed is changed based on the user-operated member and its operating state.

An image capturing apparatus such as the camera 10 may be equipped with a function that sequentially changes image capturing parameters, such as shutter speed, according to the operating method when the image capturing parameters are changed through user operations. For example, when the shutter speed can be changed by pressing a button provided on the image capturing apparatus, some image capturing apparatuses allow the shutter speed to be sequentially changed by pressing and holding the button for a certain period of time. Alternatively, when the shutter speed can be changed using a dial provided on the image capturing apparatus, some image capturing apparatuses allow the shutter speed to be automatically and sequentially changed by turning the dial a few times. Furthermore, some image capturing apparatuses allow for gradually fast-forwarding parameter changes based on the duration of press-and-hold operation of the button, for example. With such functionality, the user can change image capturing parameters sequentially without repeatedly pressing the button or turning the dial multiple times, and can quickly change the image capturing parameters to the desired image capturing parameters.

With the functionality described above, for example, when the fine adjustment button 207 is pressed and held, the value of the shutter speed is continuously changed based on the fine adjustment table, as illustrated in Fig. 3. Additionally, based on the duration of the press-and-hold operation, the time taken to move to the next value in the fine adjustment table is gradually shortened. This allows the user to quickly change the shutter speed to the desired value without having to operate the fine adjustment button 207 multiple times. In addition, the fine adjustment table of Fig. 3 maintains a constant interval between adjacent shutter speeds (the minimum resolution of the settable shutter speeds). Therefore, the shutter speed can be changed by pressing and holding the fine adjustment button 207 until reaching the vicinity of the desired shutter speed, and then further fine-adjusted using the fine adjustment button 207 to match the desired shutter speed.

In contrast, if the rough adjustment buttons 208 are provided with similar functionality, the shutter speed is continuously changed based on the rough adjustment table, as illustrated in Figs. 4A and 4B. Basically, in the rough adjustment table, the interval between adjacent shutter speeds is not constant compared to the fine adjustment table, and the difference is large. That is, if the shutter speed is changed in response to the press-and-hold operation of the rough adjustment button 208 in a control manner similar to that in response to the press-and-hold operation of the fine adjustment button 207, the shutter speed may be unexpectedly changed to a value unintended by the user, such as a sudden shift in the value.

Accordingly, in the present embodiment, the speed at which the shutter speed is changed is controlled to be different depending on whether the fine adjustment button 207 or the rough adjustment button 208 is operated on the camera 10. Specifically, when performing a press-and-hold operation of the rough adjustment button 208 on the camera 10, the shutter speed is changed more slowly compared to when performing a press-and-hold operation of the fine adjustment button 207, or it may be prevented from changing from the currently set shutter speed.

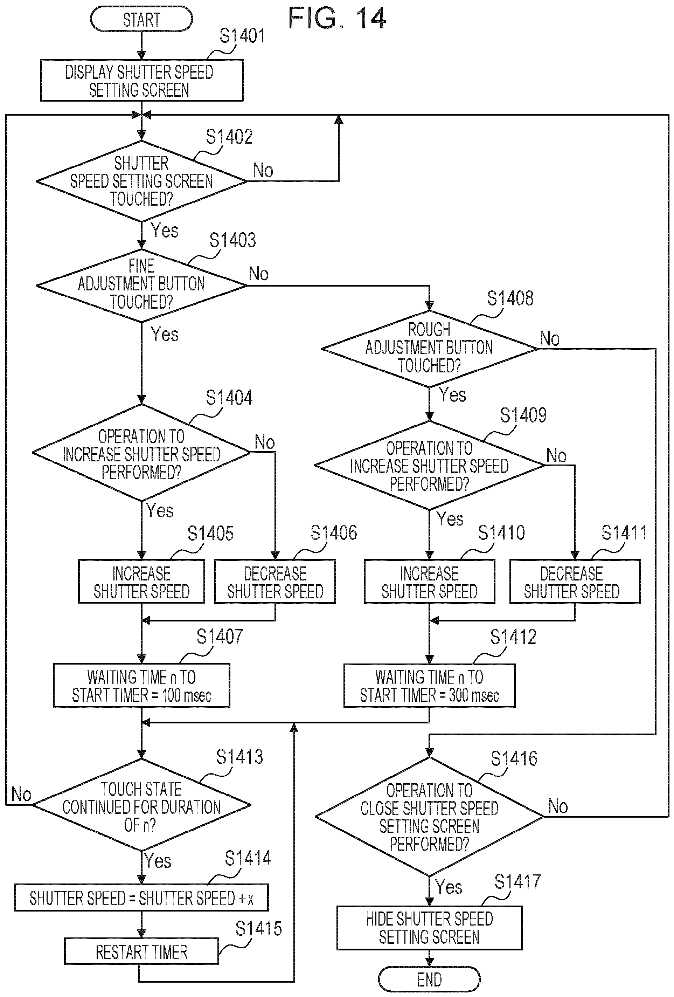

Fig. 14 is a flowchart of the operation of changing the shutter speed according to the press-and-hold duration when the button touched by the user to change the shutter speed is either one of the fine adjustment buttons 207a and 207b or one of the rough adjustment buttons 208a and 208b. This flowchart starts from the state where the camera 10 is powered on, and the system control unit 50 is in a state where operations are performed to display the shutter speed setting screen 200. Although the present embodiment describes the case where the fine adjustment buttons 207a and 207b and the rough adjustment buttons 208a and 208b are operated with tough operations, the operations are not limited to touch operations; the operations may be performed using the buttons or dials included in the operation unit 115.

This process is implemented by the system control unit 50 loading a program stored in the non-volatile memory 111 into the system memory 113 and executing it. Note that the process of the flowchart of Fig. 14 may be entirely implemented by a hardware configuration. Alternatively, the process may be partially performed by a hardware configuration, while the remaining process may be executed by a software configuration through a program.

In step S1401, based on user operations, the system control unit 50 displays the shutter speed setting screen 200 on the display unit 110. Note that the shutter speed setting screen 200 displayed here is merely an example. When the shutter speed setting screen 200 is displayed on the display unit 110, the process proceeds to step S1402.

In step S1402, the system control unit 50 determines whether the touchscreen 116 has been operated. If operations can be performed using an operation member other than the touchscreen 116, the system control unit 50 may determine whether this operation member has been operated. For example, the system control unit 50 may determine whether the operation unit 115 has been operated.

If the system control unit 50 determines that the touchscreen 116 has been touched and operated, the process proceeds to step S1403; if it is determined that there has been no operation, the system control unit 50 executes the determination process in step S1402 again after a certain period of time has elapsed.

In step S1403, the system control unit 50 determines whether the fine adjustment button (fine adjustment button 207a or fine adjustment button 207b) has been touched and operated on the touchscreen 116. If operations of the fine adjustment button can be performed using an operation member other than the touchscreen 116, the system control unit 50 may determine whether this operation member has been operated. For example, it is possible to assign the function of the fine adjustment button to the operation unit 115. If the system control unit 50 determines that the fine adjustment button has been operated, the process proceeds to step S1404; if the system control unit 50 determines that the fine adjustment button has not been operated, the process proceeds to step S1408.

In step S1404, the system control unit 50 determines whether the fine adjustment button 207b, which is used to increase the shutter speed, has been operated among the fine adjustment buttons. If the system control unit 50 determines that the fine adjustment button 207b has been operated, the process proceeds to step S1405; if the system control unit 50 determines that the fine adjustment button 207b has not been operated, it determines that the fine adjustment button 207a used to decrease the shutter speed has been operated, and the process proceeds to step S1406.

In step S1405, the system control unit 50 changes the current shutter speed set on the camera 10 to a larger value among the next selectable values. In the present embodiment, as described with reference to Fig. 3, the shutter speed can be changed in increments of 0.5 Hz when the fine adjustment button provided on the camera 10 is operated. Therefore, in this step, the amount of change in the shutter speed is set as x, and each time this step is performed, it increases by 0.5 Hz. After the change amount x is increased, the change amount x is added to the current shutter speed, and the shutter speed is changed to that value. After the change, step S1407 is performed.

In step S1406, the system control unit 50 changes the current shutter speed set on the camera 10 to a smaller value among the next selectable values. Like step S1405, the shutter speed can be set in increments of 0.5 Hz. Therefore, in this step, the amount of change in the shutter speed is set as x, and each time this step is performed, it increases by 0.5 Hz in the negative direction. After the change amount x is increased in the negative direction, the change amount x is added to the current shutter speed, and the shutter speed is changed to that value. After the change, step S1407 is performed.

In step S1407, the system control unit 50 starts time measurement using the system timer 114. In the present embodiment, at the start of the time measurement, a waiting time n used in later steps is saved in the system memory 113 as 100 msec. After that, the process proceeds to step S1413.

In step S1408, the system control unit 50 determines whether the rough adjustment button (rough adjustment button 208a or rough adjustment button 208b) has been operated on the touchscreen 116. If operations of the rough adjustment button can be performed using an operation member other than the touchscreen 116, the system control unit 50 may determine whether this operation member has been operated. For example, it is possible to assign the function of the rough adjustment button to the operation unit 115. If the system control unit 50 determines that the rough adjustment button has been operated, the process proceeds to step S1409; if the system control unit 50 determines that the rough adjustment button has not been operated, the process proceeds to step S1416.

In step S1409, the system control unit 50 determines whether the rough adjustment button 208b, which is used to increase the shutter speed, has been operated among the rough adjustment buttons.
If the system control unit 50 determines that the rough adjustment button 208b has been operated, the process proceeds to step S1410; if the system control unit 50 determines that the rough adjustment button 208b has not been operated, it determines that the rough adjustment button 208a used to decrease the shutter speed has been operated, and the process proceeds to step S1411.

In step S1410, the system control unit 50 changes the current shutter speed set on the camera 10 to a larger value among the next selectable values. In the present embodiment, when the rough adjustment button provided on the camera 10 is operated, the shutter speed can be set to a value that is an N times or 1/N times (N is a natural number) of the shutter speed calculated by the above-described flicker-free automatic detection. Therefore, in this step, the change amount x is set to a value such that the current shutter speed becomes N times the shutter speed calculated by the flicker-free automatic detection. The variable N is such that the shutter speed after the change is the shutter speed closest to the current value among the shutter speeds higher than the current value in the shutter speeds illustrated in Fig. 4A or 4B. After the change amount x is determined, the change amount x is added to the shutter speed, and the shutter speed is changed to that value. After the change, step S1412 is performed.

In step S1411, the system control unit 50 changes the current shutter speed set on the camera 10 to a lower value among the next selectable values. Like step S1410, the shutter speed can be set to a value that is an N times or 1/N times (N is a natural number) of the shutter speed calculated by the above-described flicker-free automatic detection. Therefore, in this step, the change amount x is set to a value such that the current shutter speed becomes N times the shutter speed calculated by the flicker-free automatic detection. The variable N is such that the shutter speed after the change is the shutter speed closest to the current value among the shutter speeds lower than the current value in the shutter speeds illustrated in Fig. 4A or 4B. After the change amount x is determined, the change amount x is added to the shutter speed, and the shutter speed is changed to that value. After the change, step S1412 is performed.

In step S1412, the system control unit 50 starts time measurement using the system timer 114. In the present embodiment, at the start of the time measurement, the waiting time n used in later steps is saved in the system memory 113 as 300 msec. After the waiting time n is saved, step S1413 is performed.

In step S1413, the system control unit 50 determines whether the waiting time n has elapsed at the system timer 114, and during that time, whether the fine adjustment button or rough adjustment button has been continuously touched and operated on the touchscreen 116. If the fine adjustment buttons and rough adjustment buttons have been assigned to other operation members, the system control unit 50 may determine whether these operation members have been continuously operated. Specifically, whether the press-and-hold state of the operation members (buttons) has continued for a certain period of time, or if the operation members (buttons) have been pressed and held for a certain duration, corresponds to the above determination.

In the case of operating the fine adjustment buttons and rough adjustment buttons through operations other than press-and-hold operations using operation members such as dials, the system control unit 50 may determine whether the operation to change the shutter speed has been performed continuously for the duration of the waiting time n. If the system control unit 50 determines that the state of being touched is continuing, the process proceeds to step S1414; if it determines that the state of being touched is not continuing, the process returns to step S1402.

In step S1414, the change amount x determined by step S1405, S1406, S1410, or S1411 is added to the current shutter speed, and the shutter speed is changed to that value. After the change, step S1415 is performed. Note that when executing this step after executing step S1410 or S1411, it is acceptable to set the change amount x to 0, and not to change the shutter speed. In that case, after the change amount x is set to 0, step S1415 is performed. Additionally, when executing this step after executing step S1410 or S1411, the system control unit 50 may display the change amount x on the display unit 110. This allows the user to see at a glance how much the shutter speed changes by operating the rough adjustment buttons 208a and 208b, allowing the user to more comfortably change the shutter speed.

In step S1415, the system control unit 50 restarts the system timer 114 initiated in steps S1407 and S1412. At this time, the waiting time n is not changed. After the restart, S1413 is performed again.

In step S1416, the system control unit 50 determines whether the user has performed an operation to close the shutter speed setting screen 200. In the present embodiment, the operation of touching the menu exit button 204 in Fig. 2 serves as an operation to close the shutter speed setting screen 200. Note that operations other than touch operations using the operation unit 115 may close the shutter speed setting screen 200. If it is determined that such a closing operation has been performed, S1417 is performed. If it is determined that no closing operation has been performed, step S1402 is performed again.

In step S1417, the system control unit 50 hides the shutter speed setting screen 200 displayed on the display unit 110. After hiding it, the system control unit 50 ends the flowchart.

According to the above configuration, when performing operations such as pressing and holding the fine adjustment buttons 207a and 207b on the shutter speed setting screen 200, the user can sequentially change the shutter speed and can easily and quickly set an arbitrary shutter speed. In contrast, when performing operations such as pressing and holding the rough adjustment buttons 208a and 208b, the user can more slowly change the shutter speed. This enables the user to change the shutter speed to a desired value more comfortably when operating the rough adjustment buttons.

### Other embodiments

While the present disclosure has been described with reference to embodiments, it is to be understood that the disclosure is not limited to the disclosed embodiments, but is defined by the scope of the following claims.

## Claims

1. An image capturing apparatus (10), comprising:
imaging means (104) configured to capture an image;
setting means configured to set an exposure time of the imaging means (104);
at least one memory (111, 113) configured to store instructions; and
at least one processor (50) in communication with the at least one memory (111, 113) and configured to execute the instructions to function as
detection means configured to detect flicker in the image,
control means configured to control display of display means (110), and
calculation means configured to calculate an exposure time to suppress flicker,
wherein the control means is configured to display an operation object (206) on the display means (110), the operation object (206) representing at least a portion of a range of settable exposure times; and
wherein the control means is configured to display an indicator (602) related to the calculated exposure time on the display means (110) in a case where the calculated exposure time is within a display range of the operation object (206).

2. The image capturing apparatus (10) according to Claim 1, wherein the operation object (206) is a slider-like operation object (206).

3. The image capturing apparatus (10) according to Claim 1, wherein the control means is further configured to display an indicator (210) related to the exposure time of the imaging means (104) set by the setting means.

4. The image capturing apparatus (10) according to Claim 3, wherein the control means is configured to cause the display means (110) to display only the indicator (210) related to the exposure time set by the setting means in a case where the indicator (602) related to the exposure time calculated by the calculation means is displayed at a same position as the indicator related to the exposure time set by the setting means.

5. The image capturing apparatus (10) according to Claim 3, wherein the control means is configured to cause the display means (110) to display only the indicator (602) related to the exposure time calculated by the calculation means in a case where the indicator (602) related to the exposure time calculated by the calculation means is displayed at a same position as the indicator related to the exposure time set by the setting means.

6. The image capturing apparatus (10) according to Claim 3, wherein:
the calculation means is further configured to calculate a candidate for the exposure time to suppress flicker in an image captured by the imaging means (104), separately from the calculated exposure time, based on the calculated exposure time, and
the control means is configured to control display of the indicator (602) related to the exposure time calculated by the calculation means and an indicator (603) related to the candidate.

7. The image capturing apparatus (10) according to Claim 6, wherein the control means is configured to cause the display means (110) to display the indicator (603) related to the candidate in a form different from the indicator (210) related to the exposure time set by the setting means and the indicator (602) related to the exposure time calculated by the calculation means.

8. The image capturing apparatus (10) according to Claim 6, wherein, in a case where the exposure time calculated by the calculation means and the candidate fall outside the display range of the operation object (206), the control means is configured to cause an indicator (701), indicating that the exposure time calculated by the calculation means and the candidate fall outside the display range of the operation object (206), to be displayed at an end of the operation object (206).

9. The image capturing apparatus (10) according to Claim 8, wherein the control means is configured to change a display position of the indicator (701), indicating that the exposure time calculated by the calculation means and the candidate fall outside the display range of the operation object (206), based on a difference between the exposure time set by the setting means and the exposure time calculated by the calculation means and a difference between the exposure time set by the setting means and the candidate.

10. The image capturing apparatus (10) according to Claim 6, wherein, in a case where an operation on the operation object (206) is at or below a certain speed, the control means is configured to stop updating the indicator (602) related to the exposure time upon reaching either the exposure time calculated by the calculation means or the candidate.

11. The image capturing apparatus (10) according to Claim 6, wherein:
the setting means comprises
a first operation unit configured to change the exposure time of the imaging means (104) by a first change amount; and
a second operation unit configured to change the exposure time of the imaging means (104) by a second change amount different from the first change amount, and
the second operation unit is used when changing the exposure time of the imaging means (104) to the exposure time calculated by the calculation means and to the candidate.

12. The image capturing apparatus (10) according to Claim 11, wherein the second change amount is greater than the first change amount.

13. The image capturing apparatus (10) according to Claim 11, further comprising:
a determination unit configured to determine whether the first operation unit or the second operation unit is in a first state; and
an adjustment unit configured to adjust the first change amount and the second change amount,
wherein the adjustment unit is configured to change the first change amount to a third change amount in a case where the determination unit determines that the first operation unit is in the first state, and
wherein the adjustment unit is configured to stop changing the exposure time of the imaging means (104) or change the second change amount to a fourth change amount in a case where the determination unit determines that the second operation unit is in the first state.

14. The image capturing apparatus (10) according to Claim 13, wherein the first state is a state in which the first operation unit or the second operation unit is continuously being operated.

15. The image capturing apparatus (10) according to Claim 13, wherein the third change amount and the fourth change amount increase with a duration that the first state continues.

16. The image capturing apparatus (10) according to Claim 11, wherein:
the control means is configured to control display of the setting means on the display means (110); and
the first operation unit and the second operation unit are displayed in different display forms.

17. A method of controlling an image capturing apparatus (10), comprising:
capturing an image;
detecting flicker in the image;
setting an exposure time;
calculating an exposure time to suppress flicker; and
performing control to display on display means (110) an operation object (206) representing at least a portion of a range of exposure times that can be set in the setting;
wherein, in the performing control, in a case where the exposure time calculated in the calculating is within a display range of the operation object (206), an indicator (602) related to the calculated exposure time is displayed on the display means (110).

18. A computer program comprising instructions which, when the program is executed by a computer, cause the computer to carry out the method according to Claim 17.

19. A computer-readable storage medium having stored thereon the computer program of Claim 18.
